# EUROPEAN PATENT SPECIFICATION

(11) **EP 2 759 975 B1**
(45) Date of publication and mention of the grant of the patent: **07.06.2017**
(21) Application number: 13152588.3
(22) Date of filing: 24.01.2013
(51) Int. Cl.: G06Q 20/32, G06Q 30/06, G08B 13/24

(54) **Tag system, sellable item and method for facilitating the purchase of a sellable item**
Etikettensystem, verkäuflicher Artikel und Verfahren zur Ermöglichung des Kaufs eines verkäuflichen Artikels
Système d'étiquette, article pouvant être vendu et procédé permettant de faciliter l'achat d'un article pouvant être vendu

(43) Date of publication of application: 30.07.2014
(73) Proprietor: NXP B.V., 5656 AG Eindhoven (NL)
(72) Inventor: Brink, Klaas, 5656 AG Eindhoven (NL); Sedzin, Aliaksei Vladimirovich, 5656 AG Eindhoven (NL)
(74) Representative: Krott, Michel

(56) References cited:
- US-A1- 2006 049 947
- US-A1- 2007 081 671
- US-A1- 2008 150 719

## Description

### FIELD OF THE INVENTION

The invention relates to a tag system. Furthermore, the invention relates to a sellable item. Furthermore, the invention relates to a method for facilitating the purchase of a sellable item.

### BACKGROUND OF THE INVENTION

It is known that NFC-enabled mobile devices, such as NFC-enabled smart phones or tablets, can be used to facilitate the purchase of sellable items by performing payment transactions.

US 8,086,497 B1 describes background prior art. In particular, US 8,086,497 describes price searching and customer self-checkout on a mobile device. A system for purchasing products comprises at least one subsystem that receives from a mobile device at least price and seller identification data of a product - at least the price of said product having been electronically read by the mobile device - and at least one subsystem that charges a user for the product based upon the received price and identification data.

US 2010/0082485 A1 describes systems, methods, and devices for conducting sales transactions. Embodiments include handheld, portable, electronic, point of purchase devices configured to acquire identification information from articles to be purchased, to determine a purchase price, and to acquire payment information for the purchase price. The point of purchase devices may include one or more input devices such as a near field communication device, a camera, a scanner, and a biometric sensor for acquiring the identification information and/or the payment information. In some embodiments, the near field communication device may be detachable from the point of purchase device. The point of purchase devices also may contain communication interfaces, such as a near field communication interface, a local area network interface, a short message service interface, and a personal area network interface, for transmitting the information to an external server.
In an embodiment described in US 2010/0082485 A1, a system which allows a customer to scan articles and pay for the articles without the assistance of a salesperson may also operate in conjunction with the merchant's security system to impede the removal of un-purchased articles from the store. For example, the articles may include security tags that can be deactivated after payment to prevent an alarm from sounding when the articles are removed from the store. These security tags are NFC tags encrypted with security information that when activated works in conjunction with the store's security system to sound an alarm if the tags are removed from the store without being deactivated (section [0282]).

The above-mentioned embodiment described in US 2010/0082485 A1 has the disadvantage that it is not designed for use with conventional anti-theft tags, such as anti-theft RF tags.

US 2006/049947 A1 describes a radio-frequency identification (RFID) and an electronic article surveillance (EAS) tag that includes an RFID device and an EAS device. The RFID device may operate in a plurality of states including an activated state in which communication with a reader is enabled and a deactivated state in which communication with a reader is disabled. The EAS device may operate in a plurality of states including an activated state in which activation of an alarm is enabled and a deactivated state in which activation of an alarm is disabled. The RFID device may be deactivated when the EAS device is deactivated. For example, the same piece of equipment that deactivates the EAS device also deactivates the RFID device at the same time. The RFID device may include an antenna, an RFID chip connected to the antenna for communicating with a reader, and an active element operatively disposed with respect to the antenna. The active element, which may include a conductive strip or lead, may have an activated state in which the antenna is enabled for communicating with a reader in a far field and a deactivated state in which the antenna is disabled from communicating with a reader in a far field. In addition, the EAS device may include a magnetic resonator and a bias magnet. When activated, the bias magnet may cause or affect the resonator to resonate and the active element to be in the activated state. Further, when deactivated, the bias magnet may cause the active element to be in the deactivated state.

US 2007/0081671 A1 describes an RFID tag that includes a transceiver for communicating with a tag reader; memory for storing a deactivation string, an encrypted deactivation string created externally to the tag by encrypting the deactivation string, and a trial string created externally to the tag by decrypting the encrypted deactivation; and logic for comparing the deactivation string and the trial string to determine whether they are the same, and, if they are the same, configuring the tag to permit deactivation. A method executed by the RFID tag includes comparing the trial string with the deactivation string to determine whether they are the same, and if they are the same, configuring the tag to permit deactivation. The trial string may be created externally to the tag by decrypting, using a first key, an encrypted deactivation string that is created externally to the tag by encrypting the deactivation string using a second key.

US 2008/150719 A1 describes a combination EAS and UHF security tag that adds the ability to add item level UHF functionality to a retail tag and maintain the integrity of the EAS systems installed in the business and whereby the EAS and UHF security elements are substantially formed from a common conductive layer. This combination tag also includes the ability to change a tag from a "far-field read" tag to a "near-field read" tag.

### SUMMARY OF THE INVENTION

It is an object of the invention to improve systems, methods, and devices for conducting sales transactions of the kind set forth. More specifically, it is an object of the invention to improve systems, methods, and devices which combine sales transactions with a deactivation of security tags. This object is achieved by a tag system as claimed in claim 1 and by a method for facilitating the purchase of a sellable item as claimed in claim 7.

According to an aspect of the invention, a tag system for facilitating a purchase of a sellable item is conceived, the tag system comprising an anti-theft tag and an NFC tag, wherein the NFC tag comprises a storage unit for storing payment transaction data, wherein said NFC tag is arranged to support a payment transaction for purchasing the sellable item by communicating said payment transaction data to an NFC-enabled mobile device, and wherein the NFC tag is further arranged to deactivate the anti-theft tag when the payment transaction has been completed, wherein the NFC tag is arranged to deactivate the anti-theft tag upon or after receipt of a confirmation signal from the NFC-enabled mobile device, said confirmation signal indicating that the payment transaction has been completed.

According to an exemplary embodiment of the invention, the NFC tag is arranged to deactivate the anti-theft tag by destroying electronic components comprised in said anti-theft tag.

According to a further exemplary embodiment of the invention, the NFC tag is arranged to deactivate the anti-theft tag by driving a current via conductors through a fuse, said fuse forming part of an LC circuit comprised in said anti-theft tag.

According to a further exemplary embodiment of the invention, the NFC tag is arranged to deactivate the anti-theft tag by writing a disable value into a memory unit comprised in said anti-theft tag.

According to a further exemplary embodiment of the invention, the tag system extends to a goods tracking system or article database in which the sellable item is marked as sold when the payment transaction has been completed.

According to a further aspect of the invention, a sellable item is conceived which comprises the inventive tag system.

According to a further aspect of the invention, a method for facilitating the purchase of a sellable item comprising a tag system is conceived, the tag system comprising an anti-theft tag and an NFC tag, wherein the NFC tag comprises a storage unit for storing payment transaction data, wherein said NFC tag supports a payment transaction for purchasing the sellable item by communicating said payment transaction data to an NFC-enabled mobile device, and wherein the NFC tag deactivates the anti-theft tag when the payment transaction has been completed, wherein the NFC tag deactivates the anti-theft tag upon or after receipt of a confirmation signal from the NFC-enabled mobile device, said confirmation signal indicating that the payment transaction has been completed.

### BRIEF DESCRIPTION OF THE DRAWINGS

The invention will be described in more detail with reference to the appended drawings, in which:
Fig. 1 illustrates a tag system according to an exemplary embodiment of the invention;
Fig. 2 illustrates a system comprising a sellable item and an NFC-enabled mobile device, according to an exemplary embodiment of the invention.

### DESCRIPTION OF EMBODIMENTS

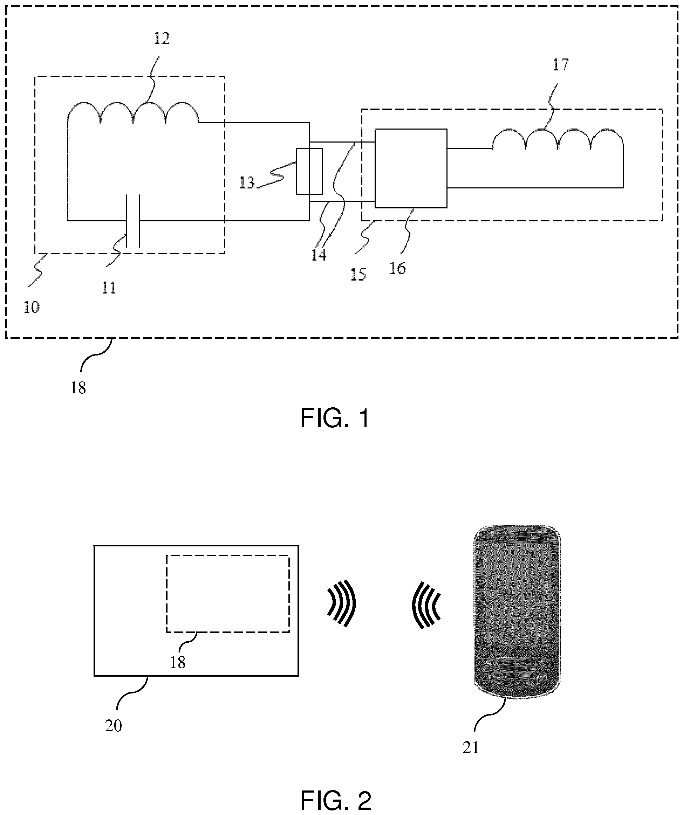

**Fig. 1** illustrates a tag system according to an exemplary embodiment of the invention. The tag system 18 comprises an anti-theft RF tag 10 coupled to an NFC tag 15. The anti-theft RF tag 10 comprises an LC circuit 11, 12. A fuse 13 forms part of the LC circuit 11, 12. The NFC tag 15 contains an NFC circuit 16 and an NFC antenna 17. The NFC circuit 16 is connected to the fuse 13 via conductors 14. When a consumer buys the sellable item which comprises the tag system 18, and the payment has been performed, the NFC circuit 16 drives a current through the inductors 14 and thereby destroys the fuse 13. The LC circuit 11, 12 is now open and the anti-theft RF tag 10 is detuned and thereby deactivated. The advantage of this embodiment is that it is compatible with existing anti-theft RF systems based on anti-theft RF tags.

**Fig. 2** illustrates a system comprising a sellable item and an NFC-enabled mobile device, according to an exemplary embodiment of the invention. The sellable item 20 comprises the inventive tag system 18. The NFC-enabled mobile device 21 is arranged to communicate with the sellable item 20, in particular with the NFC tag 15 comprised in the tag system 18 of the sellable item 20, by means of near field communication (NFC).

Thus, a combined or integrated purchase and anti-theft system is realized which may be based on conventional anti-theft devices. Sellable items can be bought by making use of the capabilities of a personal, networked reader device (typically a mobile phone or a tablet) which communicates with tag systems embedded in or attached to these sellable items, and embodying a combined purchase and anti-theft system of the kind set forth. The integration of purchase and anti-theft functionality assures that a sold item is marked correspondingly and that no anti-theft function will be activated for the sold item. Optionally, the integration may extend to a goods tracking system or an article database in which the sellable item is marked as "sold". This removes the need of a central cashier desk or point-of-sale (POS).

Hereinafter an exemplary use case will be described. The use case is based on the use of a smart phone or a tablet acting as a personal reader and on-line payment device and equipped with RFID and NFC capabilities. In this exemplary use case the following steps are performed:
i. The owner of the personal reader device ('customer') enters a shop.
ii. Any sellable item in the shop is tagged (i.e. comprises the inventive tag system) and the reader device can be used to uniquely identify this item. The personal reader device is then used to read the NFC tag comprised in the tag system attached to this sellable item.
iii. Characteristics (such as price, authenticity, detailed operation specification, application, etc.) can be obtained through the personal reader device, for example the price of this article as stored in the NFC tag or retrieved from a (network accessible) database.
iv. The device owner or customer takes the decision to buy this item.
v. Instead of having to perform payment at a central point-of-sale the payment is performed by performing an online payment transaction.
vi. After the payment transaction has been completed the article is at the same time registered in the goods tracking system as "sold". Also, the completion of the payment transaction results in immediate disabling of the anti-theft protection for this article, i.e. the NFC tag deactivates the anti-theft tag.

The skilled person will appreciate that the inventive tag system may also comprise another type of conventional anti-theft tag instead of the anti-theft RF tag. For example, in case a conventional anti-theft EM tag is used, the anti-theft protection must be disabled by burning a fuse (resulting in a change of resonance frequency) or by destroying anti-theft electronics within the anti-theft EM tag. If the anti-theft RF tag is used, the anti-theft protection may be disabled by burning a fuse which opens an LC circuit and consequently detunes the anti-theft RF tag (as described above), by destroying electronics within the anti-theft RF tag or by writing a disable value into a memory unit comprised in the anti-theft RF tag (i.e. a "soft" deactivation). In all cases the NFC tag deactivates the anti-theft tag, according to the basic principle of the invention.

It is noted that the drawings are schematic. In different drawings, similar or identical elements are provided with the same reference signs. Furthermore, it is noted that in an effort to provide a concise description of the exemplary embodiments, implementation details which fall into the customary practice of the skilled person may not have been described. It should be appreciated that in the development of any such implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

The above-mentioned embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 10: anti-theft RF tag
- 11: capacitor
- 12: RF antenna
- 13: fuse
- 14: conductors
- 15: NFC tag
- 16: NFC circuit
- 17: NFC antenna
- 18: tag system
- 20: sellable item
- 21: NFC-enabled mobile phone

## Claims

1. A tag system (18) for facilitating a purchase of a sellable item (20), the tag system (18) comprising an anti-theft tag (10) and an NFC tag (15), wherein the NFC tag (15) comprises a storage unit for storing payment transaction data, wherein said NFC tag (15) is arranged to support a payment transaction for purchasing the sellable item (20) by communicating said payment transaction data to an NFC-enabled mobile device (21), and wherein the NFC tag (15) is further arranged to deactivate the anti-theft tag (10) when the payment transaction has been completed, wherein the NFC tag (15) is arranged to deactivate the anti-theft tag (10) upon or after receipt of a confirmation signal from the NFC-enabled mobile device (21), said confirmation signal indicating that the payment transaction has been completed.

2. A tag system (18) as claimed in claim 1, wherein the NFC tag (15) is arranged to deactivate the anti-theft tag (10) by destroying electronic components comprised in said anti-theft tag (10).

3. A tag system (18) as claimed in claim 1 or 2, wherein the NFC tag (15) is arranged to deactivate the anti-theft tag (10) by driving a current via conductors (14) through a fuse (13), said fuse (13) forming part of an LC circuit (11, 12) comprised in said anti-theft tag (10).

4. A tag system (18) as claimed in claim 1, wherein the NFC tag (15) is arranged to deactivate the anti-theft tag (10) by writing a disable value into a memory unit comprised in said anti-theft tag (10).

5. A tag system (18) as claimed in any preceding claim, the tag system (18) extending to a goods tracking system or article database in which the sellable item (20) is marked as sold when the payment transaction has been completed.

6. A sellable item (20) comprising a tag system (18) as claimed in any preceding claim.

7. A method for facilitating the purchase of a sellable item (20) comprising a tag system (18), the tag system (18) comprising an anti-theft tag (10) and an NFC tag (15), wherein the NFC tag (15) comprises a storage unit for storing payment transaction data, wherein said NFC tag (15) supports a payment transaction for purchasing the sellable item (20) by communicating said payment transaction data to an NFC-enabled mobile device (21), and wherein the NFC tag (15) deactivates the anti-theft tag (10) when the payment transaction has been completed, wherein the NFC tag (15) deactivates the anti-theft tag (10) upon or after receipt of a confirmation signal from the NFC-enabled mobile device (21), said confirmation signal indicating that the payment transaction has been completed.

## Patentansprüche

1. Ein Tag System (18) zum Ermöglichen eines Kaufs eines verkäuflichen Gegenstands (20), wobei das Tag System (18) ein Anti-Diebstahl Tag (10) und ein NFC Tag (15) aufweist, wobei das NFC Tag (15) eine Speichereinheit zum Speichern von Zahlungstransaktionsdaten aufweist, wobei das NFC Tag (15) eingerichtet ist zum Unterstützen einer Zahlungstransaktion zum Kaufen des verkäuflichen Gegenstands (20) mittels Kommunizierens der Zahlungstransaktionsdaten zu einer NFC-fähigen mobilen Vorrichtung (21), und wobei das NFC Tag (15) ferner eingerichtet ist zum Deaktivieren des Anti-Diebstahl Tags (10), wenn die Zahlungstransaktion abgeschlossen wurde, wobei das NFC Tag (15) eingerichtet ist zum Deaktivieren des Anti-Diebstahl Tags (10) auf einen Empfang eines Bestätigungssignals hin oder nach dem Empfang des Bestätigungssignals von der NFC-fähigen mobilen Vorrichtung (21), wobei das Bestätigungssignal anzeigt, dass die Zahlungstransaktion abgeschlossen wurde.

2. Ein Tag System (18) gemäß Anspruch 1, wobei das NFC Tag (15) eingerichtet ist zum Deaktivieren des Anti-Diebstahl Tags (10) mittels eines Zerstörens von elektronischen Komponenten, welche in dem Anti-Diebstahl Tag (10) enthalten sind.

3. Ein Tag System (18) gemäß Anspruch 1 oder 2, wobei das NFC Tag (15) eingerichtet ist zum Deaktivieren des Anti-Diebstahl Tags (10) mittels Antreibens eines Stroms über Leiter (14) durch eine Sicherung (13), wobei die Sicherung (13) einen Teil eines LC Schaltkreises (11, 12) bildet, welcher in dem Anti-Diebstahl Tag (10) enthalten ist.

4. Ein Tag System (18) gemäß Anspruch 1, wobei das NFC Tag (15) eingerichtet ist zum Deaktivieren des Anti-Diebstahl Tags (10) mittels Schreibens eines Sperrwerts in eine Speichereinheit, welche in dem Anti-Diebstahl Tag (10) enthalten ist.

5. Ein Tag System (18) gemäß irgendeinem vorangehenden Anspruch, wobei das Tag System (18) sich auf ein Waren Verfolgungssystem oder eine Artikel Datenbank erstreckt, in welcher der verkäufliche Gegenstand (20) als verkauft markiert ist, wenn die Zahlungstransaktion abgeschlossen wurde.

6. Ein verkäuflicher Gegenstand (20) aufweisend ein Tag System (18) gemäß irgendeinem vorangehenden Anspruch.

7. Ein Verfahren zum Ermöglichen eines Kaufs eines verkäuflichen Gegenstands (20), welcher ein Tag System (18) aufweist, wobei das Tag System (18) ein Anti-Diebstahl Tag (10) und ein NFC Tag (15) aufweist, wobei das NFC Tag (15) eine Speichereinheit zum Speichern von Zahlungstransaktionsdaten aufweist, wobei das NFC Tag (15) eine Zahlungstransaktion zum Kaufen des verkäuflichen Gegenstands (20) unterstützt mittels Kommunizierens der Zahlungstransaktionsdaten zu einer NFC-fähigen mobilen Vorrichtung (21), und wobei das NFC Tag (15) das Anti-Diebstahl Tag (10) deaktiviert, wenn die Zahlungstransaktion abgeschlossen wurde, wobei das NFC Tag (15) das Anti-Diebstahl Tag (10) deaktiviert auf einen Empfang eines Bestätigungssignals oder nach dem Empfang des Bestätigungssignals von der NFC-fähigen mobilen Vorrichtung (21), wobei das Bestätigungssignal anzeigt, dass die Zahlungstransaktion abgeschlossen wurde.

## Revendications

1. Système d'étiquettes (18) permettant de faciliter l'achat d'un article pouvant être vendu (20), le système d'étiquettes (18) comprenant une étiquette antivol (10) et une étiquette NFC (15), l'étiquette NFC (15) comprenant une unité de stockage permettant de stocker des données de transaction de paiement, ladite étiquette NFC (15) étant conçue pour prendre en charge une transaction de paiement pour l'achat de l'article pouvant être vendu (20) en communiquant lesdites données de transaction de paiement à un dispositif mobile compatible NFC (21), et l'étiquette NFC (15) étant conçue en outre pour désactiver l'étiquette antivol (10) une fois la transaction de paiement réalisée, l'étiquette NFC (15) étant conçue pour désactiver l'étiquette antivol (10) lors de la ou après la réception d'un signal de confirmation émanant du dispositif mobile compatible NFC (21), ledit signal de confirmation indiquant que la transaction de paiement a été réalisée.

2. Système d'étiquettes (18) selon la revendication 1, dans lequel l'étiquette NFC (15) est conçue pour désactiver l'étiquette antivol (10) en détruisant des composants électroniques contenus dans ladite étiquette antivol (10).

3. Système d'étiquettes (18) selon la revendication 1 ou 2, dans lequel l'étiquette NFC (15) est conçue pour désactiver l'étiquette antivol (10) en faisant circuler un courant à travers un fusible (13) par des conducteurs (14), ledit fusible (13) faisant partie d'un circuit LC (11, 12) contenu dans ladite étiquette antivol (10).

4. Système d'étiquettes (18) selon la revendication 1, dans lequel l'étiquette NFC (15) est conçue pour désactiver l'étiquette antivol (10) en écrivant une valeur d'invalidation dans une unité de mémoire contenue dans ladite étiquette antivol (10).

5. Système d'étiquettes (18) selon l'une quelconque des revendications précédentes, le système d'étiquettes (18) étant étendu à un système de suivi de marchandises ou à une base de données d'articles où l'article pouvant être vendu (20) est marqué comme vendu une fois la transaction de paiement réalisée.

6. Article pouvant être vendu (20) comprenant un système d'étiquettes (18) selon l'une quelconque des revendications précédentes.

7. Procédé permettant de faciliter l'achat d'un article pouvant être vendu (20) comprenant un système d'étiquettes (18), le système d'étiquettes (18) comprenant une étiquette antivol (10) et une étiquette NFC (15), l'étiquette NFC (15) comprenant une unité de stockage permettant de stocker des données de transaction de paiement, ladite étiquette NFC (15) prenant en charge une transaction de paiement pour l'achat de l'article pouvant être vendu (20) en communiquant lesdites données de transaction de paiement à un dispositif mobile compatible NFC (21), et l'étiquette NFC (15) désactivant l'étiquette antivol (10) une fois la transaction de paiement réalisée, l'étiquette NFC (15) désactivant l'étiquette antivol (10) lors de la ou après la réception d'un signal de confirmation émanant du dispositif mobile compatible NFC (21), ledit signal de confirmation indiquant que la transaction de paiement a été réalisée.
